# EUROPEAN PATENT APPLICATION

(11) **EP 4 806 873 A1**
(43) Date of publication of application: **16.09.2026**
(21) Application number: 26164248.2
(22) Date of filing: 12.03.2026
(51) Int. Cl.: C04B 41/00, C04B 41/52, C04B 41/89, F01D 5/28

(54) **ENVIRONMENTAL BARRIER COATINGS AND METHODS OF FORMATION**

(30) Priority: 14.03.2025 US 202519080151
(71) Applicant: General Electric Company, Cincinnati, Ohio 45215 (US)
(72) Inventor: WAN, Julin, Niskayuna, 12309 (US)
(74) Representative: Openshaw & Co.

(57) **Abstract**

Coated components (10) and their methods of formation are provided. The coated component (10) may include: a substrate (12) having a surface (14); a bondcoat (16) on the surface (14) of the substrate (12); and an environmental barrier coating (18) on the bondcoat (16). At least one of the substrate (12), the bondcoat (16) or an environmental barrier coating (18) includes at least one dopant source. The at least one dopant source comprises at least one of germanium, phosphorus, vanadium, arsenic, antimony, or a mixture thereof.

## Description

### FIELD

The present disclosure generally relates to environmental barrier coatings for coated components, along with methods of their formation.

### BACKGROUND

Silicon-based materials are employed for high temperature components of gas turbine engines such as, for instance, airfoils (e.g., blades, vanes), combustor liners, and shrouds. The silicon-based materials may include silicon-based monolithic ceramic materials, intermetallic materials, and composites. For example, silicon-based ceramic matrix composites (CMCs) may include silicon-containing fibers reinforcing a silicon-containing matrix phase.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional schematic view of an exemplary coated component including a substrate coated with a single-phase bondcoat and a barrier coating;
FIG. 2 is a cross-sectional schematic view of another exemplary coated component including a substrate coated with a multi-phase bondcoat and a barrier coating; and
FIG. 3 is a flow chart diagram of an exemplary method of forming a coated component described herein.

### DEFINITIONS

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

As used herein, the terms "first", "second", and "third" may be used interchangeably to distinguish one component from another and are not intended to signify location or importance of the individual components.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth. As used herein, "RE" refers to a rare earth element or a mixture of rare earth elements. More specifically, the " RE" refers to the rare earth elements of scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), or mixtures thereof.

As used herein, "silica" refers to a silicon oxide in the form of SiO₂. Conversely, "elemental silicon" refers to silicon without any alloying materials present, outside of incidental impurities. It is sometimes referred to in the art as "silicon metal." Elemental silicon has a melting point of about 1414 °C.

As used herein, "alumina" refers to an aluminum oxide in the form of Al₂O₃.

As used herein, the term "mullite" generally refers to a mineral containing alumina and silica (i.e., an aluminum silicate). That is, mullite is a chemical compound of alumina and silica. Typically, mullite may have an alumina (Al₂O₃) and silica (SiO₂) ratio of about 3 to 2 (e.g., within 10 mole % of 3 to 2 of alumina to silica). However, a ratio of about 2 to 1 has also been reported as mullite (e.g., within 10 mole % of 2 to 1 of alumina to silica).

As used herein, the term "substantially free" is understood to mean completely free of said constituent, or inclusive of trace amounts of same. "Trace amounts" are those quantitative levels of chemical constituent that are barely detectable and provide no benefit to the functional or aesthetic properties of the subject composition. The term "substantially free" also encompasses completely free.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of" since the relative position above or below depends upon the orientation of the device to the viewer.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

Silicon carbide and silicon nitride ceramics undergo oxidation in dry, high temperature environments. This oxidation produces a passive, silicon oxide scale on the surface of the material. In moist, high temperature environments containing water vapor, such as a turbine engine, both oxidation and recession occurs due to the formation of a passive silicon oxide scale and subsequent conversion of the silicon oxide to gaseous silicon hydroxide. To prevent recession in moist, high temperature environments, environmental barrier coatings (EBCs) are deposited onto silicon carbide and silicon nitride materials.

Currently, EBC materials are made out of rare earth silicate compounds. These materials seal out water vapor, preventing it from reaching the silicon oxide scale on the silicon carbide or silicon nitride surface, thereby preventing recession. Such materials cannot prevent oxygen penetration, however, which results in oxidation of the underlying substrate. Oxidation of the substrate yields a passive silicon oxide scale, along with the release of carbonaceous or nitrous oxide gas. The carbonaceous (i.e., CO, CO₂) or nitrous (i.e., NO, NO₂, etc.) oxide gases cannot escape out through the dense EBC and thus, blisters form, which can cause spallation of the EBC. The use of a silicon bondcoat has been the solution to this blistering problem to date. The silicon bondcoat forms a thermally grown oxide (TGO) layer of silica beneath the EBC without liberating a gaseous by-product.

However, pure silica has a strong tendency to devitrify or crystallize. Crystalline silica tends to crack due to a phase transformation and therefore crystalline silica threatens the mechanical integrity of the EBC. Thus, an improved TGO layer would be welcomed within the art.

Coated components are generally provided that have an improved TGO layer positioned between a bondcoat and an EBC, along with method of formation. Generally, the TGO layer includes silica and at least one dopant oxide. Without wishing to be bound by any particular theory, it is believed that the at least one dopant oxide, when combined with silica, results in a compound glass. The compound glass formed from interaction of silica and the at least one dopant oxide has stronger resistance to devitrification or crystallization than pure silica. Thus, the TGO layer within the EBC may remain amorphous for longer time, effectively extending the life of the EBC system.

In a non-limiting example, the dopant oxide can be introduced into the TGO layer in one or more of following ways: doping the bondcoat with at least one dopant source, doping the substrate with the at least one dopant source, doping the EBC material with the at least one dopant source, or any combination of these. The at least one dopant source may include at least one of germanium, phosphorus, vanadium, arsenic, antimony, or a mixture thereof. That is, upon oxidation of the coating with the at least one dopant source in any of the bondcoat, the EBC, or the substrate, silicon oxides to form silica as a TGO layer and the at least one dopant source oxidizes and migrates to form at least one dopant oxide in the TGO layer. Embodiments of such TGO layers and these methods are described in greater detail below.

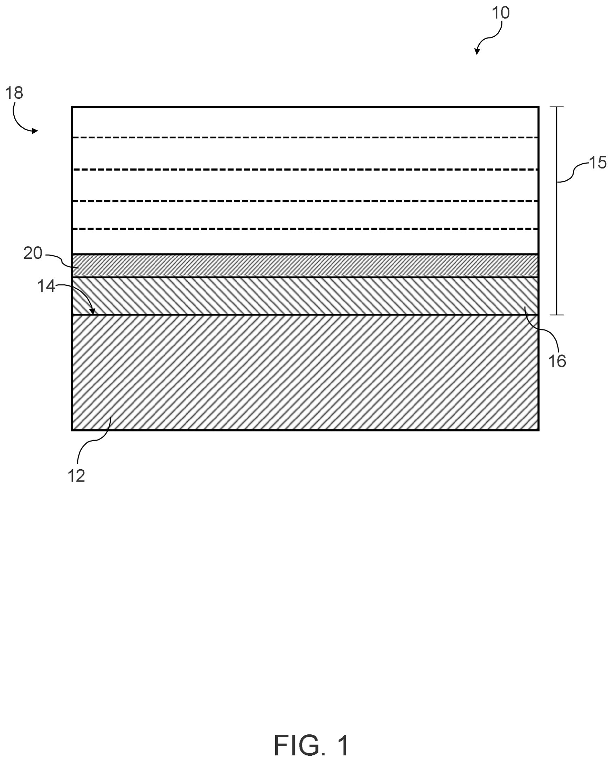

Referring to FIG. 1, an exemplary coated component 10 is shown including a substrate 12 having a surface 14 with an EBC system 15 thereon. The EBC system 15 includes a bondcoat 16 on the surface 14 of the substrate 12 and an EBC 18 on the bondcoat 16. As discussed in greater detail below, the bondcoat 16 includes silicon, such as elemental silicon or a combination of elemental silicon and a mullite-based phase. Generally, the bondcoat 16 may be utilized between the substrate 12 and the EBC 18 to enhance the adhesion of the EBC 18 to the substrate 12 and, potentially, function as a sacrificial oxidation layer within the EBC system 15.

A TGO layer 20 is shown on the bondcoat 16, although the TGO layer 20 may not be formed in the initial coated component 10. More specifically, the TGO layer 20 is illustrated between the bondcoat 16 and the EBC 18. The TGO layer 20 forms upon exposure of the bondcoat 16 to oxygen to form a thin layer of silica thereon (defining the TGO layer 20) on the bondcoat 16. For example, silicon in the bondcoat 16 may be oxidized upon exposure to oxygen at oxidizing temperatures (e.g., greater than 900 °C) to form the thin layer of silica. The oxidation may occur during component processing or in situ during service of the coated component in use (e.g., as a component within a hot gas path of a gas turbine engine). Since the TGO layer 20 is formed after formation of the EBC 18, the term "coated component" generally refers to a substrate having the EBC system 15 thereon, both before oxidation and formation of the TGO layer 20 and after oxidation and formation of the TGO layer 20. The TGO layer 20 includes silica and at least one dopant oxide. The dopant oxide within the TGO layer 20 may include, for example, a germanium oxide, a phosphorus oxide, a vanadium oxide, an arsenic oxide, an antimony oxide, or a mixture thereof. Without wishing to be bound by any particular theory, it is believed that such oxides are glass network formers, such that when they are mixed with silica, (also a network former) the stability of the resulting amorphous network may increase.

Without wishing to be bound by any particular theory, it is believed that the at least one dopant oxide is present in a sufficient amount to substantially stabilize the amorphous structure of the TGO layer 20, particularly of the silica within the TGO layer 20. Thus, the TGO layer 20 with the silica and at least one dopant oxide is more resistant to crystallization when exposed to an oxidizing atmosphere at high temperature than a similar oxide that does not contain the at least one dopant oxide. By remaining amorphous, the TGO layer 20 helps to avoid cracking during thermal cycling. Without wishing to be bound by any particular theory, it is believed that if the TGO layer 20 is crystalline, it assumes the form of cristobalite, which goes through a reversible phase transformation at around 270 °C. This phase transformation may involve a volume change that can lead to cracking of the TGO layer 20.

In one non-limiting embodiment, the TGO layer 20 comprises 80 wt% to 99.9 wt% of the silica. As a further non-limiting example, the TGO layer 20 comprises 0.1 wt% to 20 wt% of the at least one dopant oxide. Without wishing to be bound by any particular theory, it is believed that excessive dopant oxide in the TGO layer 20 may lead to phase separation. Such a dopant-rich phase from such a phase separation would have a relatively low melting point and thus harm the refractoriness of the TGO layer 20.

The dopant oxide can be introduced into the TGO layer 20 in one or more of the following ways: doping the bondcoat 16 with a dopant(s) source (e.g., the dopant element, a compound comprising the dopant such as a dopant silicide, or both); doping the substrate 12 with a dopant(s) source (e.g., the dopant element, a compound comprising the dopant such as a dopant silicide, or both); doping the EBC 18 with a dopant(s) source (e.g., the dopant element, a compound comprising the dopant such as a dopant oxide, or both); or combinations thereof. That is, at least one of the substrate 12, the bondcoat 16, or the EBC 18 includes the dopant(s) source. Upon exposure of the substrate 12 having the bondcoat 16 and the EBC 18 to an oxidizing environment, the dopant diffuses to the TGO layer 20. More specifically, upon exposure to the oxidizing environment, oxidizing migration and oxidation of the dopant results in the formation of the at least one dopant oxide within the TGO layer 20.

In particular embodiments, the TGO layer 20 may also include a boron oxide in combination with the at least one dopant oxide. Without wishing to be bound by any particular theory, it is believed that the inclusion of the boron oxide within the TGO layer 20 helps to further inhibit the crystallization of silica and thus further stabilizes the amorphous structure of the TGO layer 20. In embodiments, the TGO layer 20 may include 0.1 wt% to 20 wt% of the boron oxide.

For example, a boron source may be disposed within at least one of the substrate 12, the bondcoat 16, or the EBC 18 to provide boron to the TGO layer 20 during exposure of the at least one of the substrate 12, the bondcoat 16, or the EBC 18 to an oxidizing environment at an oxidating temperature (e.g., 900 °C or greater). In embodiments, the bondcoat 16 includes the boron source. In some other such embodiments, the substrate 12, the EBC 18, or both of these, may include the boron source. In one non-limiting embodiment, the boron source may be boron oxide. Alternatively, the boron source may be elemental boron or a substance that decomposes to form boron and then oxidize during processing to become the boron oxide within the TGO layer 20.

However, in an alternative embodiment, the EBC system 15 may be substantially free from boron so as to rely on the dopant source forming the dopant oxide without the presence of boron oxide in the TGO layer 20.

In particular embodiments, the TGO layer 20 may also include alumina, such as in an alumina amount 0.1 wt% to 20 wt%. Without wishing to be bound by any particular theory, it is believed that the presence of alumina within the TGO layer 20 may further inhibit the crystallization of silica and thus further stabilize the amorphous structure of the TGO layer 20. In a non-limiting embodiment, the bondcoat 16 includes an aluminum source. In additional non-limiting embodiments, the substrate 12, the EBC 18, or both of these, may include the aluminum source. In one non-limiting embodiment, the aluminum source may be aluminum oxide. Alternatively, the aluminum source may be elemental aluminum or a substance that decomposes to form aluminum which then oxidizes during processing or in situ during service of the coated component in use (e.g., as a component within a hot gas path of a gas turbine engine) to become the alumina within the TGO layer 20.

However, in an alternative embodiment, the EBC system 15 may be substantially free from aluminum so as to rely on the dopant source forming the dopant oxide without the presence of alumina in the TGO layer 20.

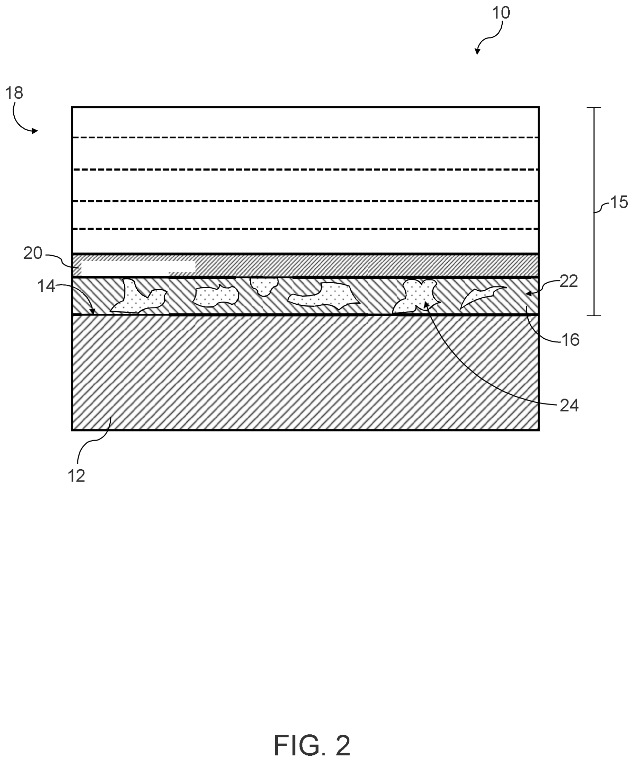

As stated above, the bondcoat 16 generally comprises silicon (e.g., in the form of elemental silicon or a silicon-containing material such as a silicide, mullite, etc.). In the embodiment where the bondcoat 16 also includes the dopant(s) source, the bondcoat 16 may include silicon and the dopant(s) source dispersed throughout, e.g., in the form of discrete particles. In one non-limiting embodiment, the bondcoat 16 includes a single phase of silicon, such as elemental silicon, as shown in FIG. 1. In other embodiments, the bondcoat 16 includes a silicon-based matrix that has multiple phases, such as a silicon phase (i.e., comprising elemental silicon) and a mullite-based phase (i.e., comprising mullite). Referring to FIG. 2, the coated component 10 is shown including a bondcoat 16 that includes a multi-phase silicon-based matrix that includes a silicon-based phase 22 and a mullite-based phase 24.

When present, the mullite-based phase 24 is a mullite-based material. For instance, the bondcoat 16 may include 0.1 wt% to 25 wt% of the mullite-based phase 24. Generally, mullite has a relatively slow diffusion rate for oxygen at all temperatures of interest, even up to 1650 °C (e.g., 1200 °C to 1650 °C). At temperatures over 1200 °C, it is believed that the only other crystalline oxide that has a lower oxygen diffusion rate than mullite is alumina, which has a very high expansion coefficient compared to the substrate 12 and is generally very difficult to deposit as a dense coating without spallation. Although mullite has a coefficient of thermal expansion ("CTE") that is similar to that of SiC-based CMC substrate and that of the silicon-based phase 22 (e.g., silicon), the CTE of mullite is not an exact match to SiC or Si. This slight mismatch of CTE could lead to problems related to thermal expansion, such as cracking and/or delamination, if the bondcoat 16 is too thick. For example, a bondcoat 16 having a thickness of 500 µm or more may lead to problems related to the CTE mismatch after repeated exposure to the operating temperatures of a gas turbine engine. On the other hand, it is believed that a bondcoat 16 having a maximum thickness of 385 µm or less, such as 25 µm to 385 µm, is better suited to survive such operating temperatures without significant problems from the CTE mismatch. In one particular non-limiting embodiment, the bondcoat 16 has a maximum thickness of 255 µm, such as 75 µm to 255 µm. In particular embodiments, the multiple phase of the bondcoat 16 has substantially the same thickness.

In both embodiments of FIG. 1 and FIG. 2, the bondcoat 16 may also include at least one dopant source as described above. For example, the bondcoat 16 may include 0.1 wt% to 20 wt% of the at least one dopant source (e.g., 0.1 wt% to 10 wt%). Upon oxidation, the at least one dopant source (e.g., germanium, phosphorus, vanadium, arsenic, antimony, or a mixture thereof) may migrate and form a respective dopant oxide within the oxidized silicon (i.e., silica) so as to form the resulting TGO layer 20.

In one particular non-limiting embodiment, the substrate 12 is formed from a silicon-containing material, such as a ceramic matrix composite ("CMC") material. As used herein, ceramic-matrix-composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃·2SiO₂), as well as glassy aluminosilicates.

In certain embodiments, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, such as a cure or burn-out to yield a high char residue in the preform, and subsequent chemical processing, such as melt-infiltration with silicon, to arrive at a component formed of a CMC material having a desired chemical composition.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer.

In one particular non-limiting embodiment, the substrate 12 may include the dopant(s) source, such as in the form of a dopant silicide or other suitable substance comprising dopant, prior to formation of the TGO layer 20. After formation of the bondcoat 16 and upon exposing the substrate 12 with the bondcoat 16 to an oxidizing environment, the dopant(s) diffuses into, and oxidizes within, the TGO layer 20. That is, the dopant may diffuse from the substrate 12 through the bondcoat 16 and into the TGO layer 20 during or after its formation.

As stated above, the bondcoat 16 and TGO layer 20 may be used in conjunction with an EBC 18 to form the coated component 10 with an improved effective life for the EBC system 15. As used herein, the EBC 18 refers to a coating comprising one or more layers of ceramic materials, each of which provides specific or multi-functional protections to the underlying CMC. EBC 18 may generally include a plurality of layers, such as rare earth silicate coatings (e.g., rare earth disilicates such as slurry or APS-deposited yttrium ytterbium disilicate (YbYDS)), alkaline earth aluminosilicates (e.g., comprising barium-strontium-aluminum silicate (BSAS), such as having a range of compositions of BaO, SrO, Al₂O₃, SiO₂, or combinations thereof), hermetic layers (e.g., a rare earth disilicate), outer coatings (e.g., comprising a rare earth monosilicate, such as slurry or APS-deposited yttrium monosilicate (YMS)), or combinations thereof. One or more layers of the EBC 18 may be doped as desired and the EBC 18 may also be coated with an abradable coating (not shown).

The EBC 18 may include any combination of one or more layers formed from materials selected from typical EBC 18 or thermal barrier coating ("TBC") layer chemistries, including but not limited to rare earth silicates (e.g., mono-silicates and di-silicates), aluminosilicates (e.g., mullite, barium strontium aluminosilicate (BSAS), rare earth aluminosilicates, etc.), hafnia, zirconia, stabilized hafnia, stabilized zirconia, rare earth hafnates, rare earth zirconates, rare earth gallium oxide, etc. The EBC 18 may include a hafnia layer, an alumina layer, or both. Alternatively or additionally, the EBC 18 may include a rare earth disilicate layer, a rare earth monosilicate layer, or both. The EBC 18 may be formed from a plurality of individual layers 28. In the embodiments shown, EBC 18 may include any combination of a hermetic layer, silicate layer, or any of the layers described above.

In one particular non-limiting embodiment, the EBC 18 may include the dopant(s) source, such as in the form of a dopant silicide, as described above. After formation of the bondcoat 16 and the EBC 18 and upon exposure to an oxidizing environment, the dopant(s) diffuses into, and oxidizes within, the TGO layer 20 to form the dopant oxide therein. That is, the dopant may diffuse from the EBC 18 into the TGO layer 20 during or after its formation.

The coated component 10 is particularly suitable for use as a component found in high temperature environments, such as those present in gas turbine engines, for example, combustor components, turbine blades, shrouds, nozzles, heat shields, and vanes. In particular, the coated component 10 may be a CMC component positioned within a hot gas flow path of the gas turbine such that the EBC system forms an environmental barrier for the underlying substrate 12 to protect the component within the gas turbine when exposed to the hot gas flow path.

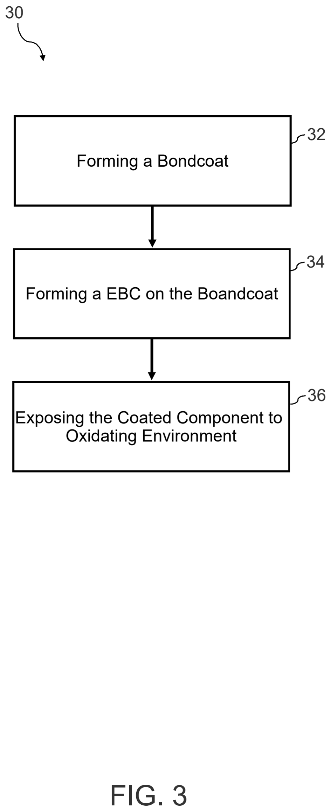

Methods are also generally provided for forming coated components, such as any of the exemplary coated components described above. Referring to FIG. 3, an exemplary method 30 is shown for forming a coated component having a TGO layer that includes at least one dopant oxide therein, such as described above. At 32, a bondcoat is formed on a surface of a substrate, with the bondcoat comprising silicon (and optionally also a second phase, such as mullite). At 34, an EBC is formed on the bondcoat. At 36, the coated component is exposed to an oxidizing environment such that a TGO layer is formed on the bondcoat between the bondcoat and the environmental barrier coating. At least one of the substrate, the bondcoat, or the environmental barrier coating comprises at least one dopant that includes germanium, phosphorus, vanadium, arsenic, antimony, or a mixture thereof such that, upon exposing the coated component to the oxidizing environment, the at least one dopant forms at least one dopant oxide within the TGO layer.

Further aspects are provided by the subject matter of the following clauses:
A coated component comprising: a substrate having a surface; a bondcoat on the surface of the substrate, wherein the bondcoat comprises silicon; and an environmental barrier coating on the bondcoat, wherein at least one of the substrate, the bondcoat, or the environmental barrier coating includes at least one dopant source, and wherein the at least one dopant source comprises at least one of germanium, phosphorus, vanadium, arsenic, antimony, or a mixture thereof.

The coated component as in any preceding clause, wherein the bondcoat includes silicon and the at least one dopant source.

The coated component as in any preceding clause, wherein the bondcoat includes silicon, mullite, and the at least one dopant source.

The coated component as in any preceding clause, wherein the environmental barrier coating includes the at least one dopant source.

The coated component as in any preceding clause, wherein, upon oxidation of the silicon in the bondcoat and oxidation of the at least one dopant source, a thermally grown oxide layer is formed between the bondcoat and the environmental barrier coating, wherein the thermally grown oxide layer comprises silica and at least one dopant oxide.

The coated component as in any preceding clause, wherein the at least one dopant oxide comprises at least one of a germanium oxide, a phosphorus oxide, a vanadium oxide, an arsenic oxide, an antimony oxide, or a mixture thereof.

The coated component as in any preceding clause, wherein the thermally grown oxide layer comprises 80 wt% to 99.9 wt% of the silica and 0.1 wt% to 20 wt% of the at least one dopant oxide.

The coated component as in any preceding clause, wherein the at least one dopant source comprises germanium.

The coated component as in any preceding clause, wherein the at least one dopant source comprises phosphorus.

The coated component as in any preceding clause, wherein the at least one dopant source comprises vanadium.

The coated component as in any preceding clause, wherein the at least one dopant source comprises antimony.

The coated component as in any preceding clause, wherein the at least one dopant source comprises at least two selected from the group of: germanium, phosphorus, vanadium, arsenic, and antimony.

The coated component as in any preceding clause, wherein at least one of the substrate, the bondcoat, or the environmental barrier coating includes a boron source.

The coated component as in any preceding clause, wherein, upon oxidation of the silicon in the bondcoat, oxidation of the at least one dopant source, and oxidation of the boron source, a thermally grown oxide layer is formed between the bondcoat and the environmental barrier coating, wherein the thermally grown oxide layer comprises silica, a boron oxide, and at least one dopant oxide, wherein the thermally grown oxide layer comprises 0.1 wt% to 20 wt% of the boron oxide.

The coated component as in any preceding clause, at least one of the substrate, the bondcoat, or the environmental barrier coating includes an aluminum source.

The coated component as in any preceding clause, wherein, upon oxidation of the silicon in the bondcoat, oxidation of the at least one dopant source, and oxidation of the aluminum source, a thermally grown oxide layer is formed between the bondcoat and the environmental barrier coating, wherein the thermally grown oxide layer comprises silica, alumina, and at least one dopant oxide, wherein the thermally grown oxide layer comprises 0.1 wt% to 20 wt% of the alumina.

The coated component as in any preceding clause, wherein the substrate comprises silicon.

The coated component as in any preceding clause, wherein the substrate comprises a ceramic matrix composite.

A method of forming the coated component as in any preceding clause.

A method of forming a coated component, the method comprising: forming a bondcoat on a surface of a substrate, wherein the bondcoat comprises silicon; and forming an environmental barrier coating on the bondcoat, wherein at least one of the substrate, the bondcoat, or the environmental barrier coating includes a dopant source, and wherein the at least one dopant source comprises at least one of germanium, phosphorus, vanadium, arsenic, antimony, or a mixture thereof.

The method of any preceding clause, further comprising: exposing the substrate with bondcoat and environmental barrier coating to an oxidizing environment such that silicon from the bondcoat and the at least one dopant source are oxidized to form a thermally grown oxide layer between the bondcoat and the environmental barrier coating, wherein the thermally grown oxide layer comprises silica and at least one dopant oxide formed from the at least one dopant source.

A coated component formed from the method of any preceding clause.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A coated component (10) comprising:
a substrate (12) having a surface (14);
a bondcoat (16) on the surface (14) of the substrate (12), wherein the bondcoat (16) comprises silicon; and
an environmental barrier coating (18) on the bondcoat (16),
wherein at least one of the substrate (12), the bondcoat (16), or the environmental barrier coating (18) includes at least one dopant source, and wherein the at least one dopant source comprises at least one of germanium, phosphorus, vanadium, arsenic, antimony, or a mixture thereof.

2. The coated component (10) as in claim 1, wherein the bondcoat (16) includes silicon and the at least one dopant source.

3. The coated component (10) as in any preceding claim, wherein the bondcoat (16) includes silicon, mullite, and the at least one dopant source.

4. The coated component (10) as in claim 1, wherein the environmental barrier coating (18) includes the at least one dopant source.

5. The coated component (10) as in any preceding claim, wherein, upon oxidation of the silicon in the bondcoat (16) and oxidation of the at least one dopant source, a thermally grown oxide layer (20) is formed between the bondcoat (16) and the environmental barrier coating (18), wherein the thermally grown oxide layer (20) comprises silica and at least one dopant oxide.

6. The coated component (10) as in claim 5, wherein the at least one dopant oxide comprises at least one of a germanium oxide, a phosphorus oxide, a vanadium oxide, an arsenic oxide, an antimony oxide, or a mixture thereof.

7. The coated component (10) as in any of claims 5 to 6, wherein the thermally grown oxide layer (20) comprises 80 wt% to 99.9 wt% of the silica and 0.1 wt% to 20 wt% of the at least one dopant oxide.

8. The coated component (10) as in any preceding claim, wherein the at least one dopant source comprises at least two selected from the group of: germanium, phosphorus, vanadium, arsenic, and antimony.

9. The coated component (10) as in any preceding claim, wherein at least one of the substrate (12), the bondcoat (16), or the environmental barrier coating (18) includes a boron source.

10. The coated component (10) as in claim 9, wherein, upon oxidation of the silicon in the bondcoat (16), oxidation of the at least one dopant source, and oxidation of the boron source, a thermally grown oxide layer (20) is formed between the bondcoat (16) and the environmental barrier coating (18), wherein the thermally grown oxide layer (20) comprises silica, a boron oxide, and at least one dopant oxide, wherein the thermally grown oxide layer (20) comprises 0.1 wt% to 20 wt% of the boron oxide.

11. The coated component (10) as in any preceding claim, at least one of the substrate (12), the bondcoat (16), or the environmental barrier coating (18) includes an aluminum source.

12. The coated component (10) as in claim 11, wherein, upon oxidation of the silicon in the bondcoat (16), oxidation of the at least one dopant source, and oxidation of the aluminum source, a thermally grown oxide layer (20) is formed between the bondcoat (16) and the environmental barrier coating (18), wherein the thermally grown oxide layer (20) comprises silica, alumina, and at least one dopant oxide, wherein the thermally grown oxide layer (20) comprises 0.1 wt% to 20 wt% of the alumina.

13. The coated component (10) as in any preceding claim, wherein the substrate (12) comprises silicon.

14. The coated component (10) as in any preceding claim, wherein the substrate (12) comprises a ceramic matrix composite.

15. A method of forming a coated component (10), the method comprising:
forming a bondcoat (16) on a surface (14) of a substrate (12), wherein the bondcoat (16) comprises silicon; and
forming an environmental barrier coating (18) on the bondcoat (16), wherein at least one of the substrate (12), the bondcoat (16), or the environmental barrier coating (18) includes a dopant source, and wherein the at least one dopant source comprises at least one of germanium, phosphorus, vanadium, arsenic, antimony, or a mixture thereof.
